# FASCICULE DE BREVET EUROPEEN

(11) **EP 1 282 985 B1**
(45) Date de publication et mention de la délivrance du brevet: **20.08.2008**
(21) Numéro de dépôt: 01929719.1
(22) Date de dépôt: 26.04.2001
(51) Int. Cl.: H04Q 7/12

(54) **SYSTEME D'ACQUITTEMENT DE LECTURE D'UN MESSAGE RECU SUR UN TERMINAL MOBILE**
SYSTEM ZUM QUITTIEREN DES LESENS VON EINER IM MOBILENDGERÄT EMPFANGENEN NACHRICHT
SYSTEM FOR ACKNOWLEDGING READING OF A MESSAGE RECEIVED IN A MOBILE TERMINAL

(30) Priorité: 09.05.2000 FR 0005890; 07.07.2000 FR 0008874
(43) Date de publication de la demande: 12.02.2003
(73) Titulaire: FRANCE TELECOM, 75015 Paris (FR)
(72) Inventeur: PROVOST, Hervé, F-38170 Seyssinet-Pariset (FR); PICQUENOT, David, F-14280 Saint Contest (FR)
(74) Mandataire: Lemoyne, Didier
(86) Numéro de dépôt international: PCT/FR2001/001285
(87) Numéro de publication internationale: WO 2001/086978

(56) Documents cités:
- WO-A-95/12933
- ETSI: "DIGITAL CELLULAR TELECOMMUNICATIONS SYSTEM (PHASE 2+); TECHNICAL REALIZATION OF THE SHORT MESSAGE SERVICE (SMS); (GSM 03.40 Version 7.4.0 Release 1998)" ETSI TS 100 901 V7.4.0, décembre 1999 (1999-12), pages 1-121, XP002160590

## Description

La présente invention concerne un système d'acquittement de lecture d'un message envoyé par un terminal émetteur et reçu sur un terminal mobile destinataire.

L'invention s'applique au domaine de la téléphonie mobile (GSM, GPRS, UMTS, etc), et plus particulièrement aux services de télécommunication pour lesquels l'auteur d'un message désire un acquittement de lecture, voire un simple accusé de réception, émis par le destinataire du message à partir de son terminal mobile.

II existe à ce jour divers services proposant l'envoi de messages sur des terminaux mobiles. Ces terminaux sont par exemple des terminaux GSM gérant les mini-messages (SMS), et des messagers (pagers). L'accès au service se fait par différents moyens : Minitel, navigateur Web, courrier électronique, via un centre d'appels, etc

Cependant, ces services n'offrent pas de garantie quant à la lecture d'un message reçu sur le terminal mobile ni même la réception d'un message sur ledit terminal mobile.

Le document WO-A-95/129933 décrit un système d'acquittement de réception et/ou de lecture d'un message dans lequel un champ d'option ("Reply Option") du message envoyé est utilisé pour indiquer qu'un acquittement utilisateur est requis.

Aussi, le problème technique à résoudre par l'objet de la présente invention est de proposer un système d'acquittement de lecture d'un message envoyé par un terminal émetteur et reçu sur un terminal mobile destinataire, qui permettrait à l'auteur d'un message d'être certain de la lecture, et accessoirement de la réception, de celui-ci sur le terminal mobile distant, et de permettre en réaction à la lecture de ce message l'envoi d'un autre message ou l'appel phonique de son auteur.

La solution au problème technique posé consiste en un système d'acquittement de lecture de message selon la revendication 1, un terminal émetteur selon la revendication 4, un terminal mobile selon la revendication 7 et un serveur selon la revendication 9.

L'accès au système d'acquittement conforme à l'invention se fait donc par trois catégories fonctionnelles de terminaux :
- l'un pour émettre des messages, à savoir le terminal émetteur,
- un autre, le terminal mobile, équipé pour recevoir les messages, les traiter, et renvoyer un acquittement pour chaque message reçu,
- et enfin le dernier, permettant de recevoir les acquittements, qui peut d'ailleurs être physiquement le même que le terminal émetteur qui a servi à envoyer le message.

Dans le cas de l'utilisation d'un navigateur Web pour envoyer le message initial, l'auteur connecte son terminal à un serveur Web réservé au service d'acquittement et se voit alors proposé les rubriques suivantes :
(a) Identifiant (numéro) du terminal mobile vers lequel envoyer le message,
(b) Texte du message à envoyer,
(c) Choix du mode de retour de l'acquittement par message électronique sous forme de texte (courrier électronique, message SMS par exemple) ou un message généré par synthèse vocale (téléphone),
(d) Identifiant selon le choix fait en (c) auquel adresser l'acquittement par ledit message électronique sous forme de texte ou ledit message généré par synthèse vocale, tel que :
   - adresse de messagerie électronique pour le courrier électronique,
   - numéro GSM ou autre pour les messages SMS,
   - numéro GSM, RTC, RNIS, ou autre pour le téléphone (synthèse vocale).
(e) De manière optionnelle, identifiant d'un moyen de télécommunication (numéro GSM, RTC, RNIS, ou autre) où joindre l'auteur du message,
(f) De manière optionnelle également, demande d'acquittement de la réception du message par ledit mode de retour d'acquittement de lecture (l'acquittement de réception revient à l'auteur par la même voie que l'acquittement de lecture).

L'appui, par exemple, sur un bouton disponible sur l'interface, valide et envoie le message sur le réseau de télécommunication à destination du terminal mobile.

Dans le cas de l'envoi d'un même message à plusieurs terminaux mobiles destinataires, la rubrique (a) peut admettre plusieurs identifiants (numéros), le même message étant envoyé à chacun des terminaux mobiles spécifiés. L'acquittement se fait comme lorsqu'il s'agit de messages envoyés un à un, à savoir autant d'acquittements que d'identifiants.

Afin d'augmenter l'efficacité de l'envoi d'un message, et si cela est possible au niveau du navigateur Web, les rubriques (c), (d), (e) et (f) contiennent les valeurs renseignées lors de la dernière utilisation.

Du côté de la réception du message, le terminal mobile peut vibrer ou sonner en fonction de ses possibilités et des préférences de l'utilisateur. Ce signal est, par exemple, activé à la réception d'un mini-message SMS sur GSM. La lecture du message est, selon les terminaux mobiles, possible instantanément (affichage d'emblée sur l'écran) ou après une action propre à l'utilisation du terminal.

L'affichage d'un message correspond à la mise en place d'une première interface (A) donnant deux choix au destinataire:
1) envoyer l'acquittement de lecture du message au terminal émetteur,
2) appeler phoniquement l'auteur du message, si celui-ci a renseigné la rubrique (e).

Après l'envoi de l'acquittement (choix 1)) ou après l'appel phonique (choix 2)), une deuxième interface (B) propose à nouveau deux au destinataire :
1) archiver le message,
2) effacer le message.

Après les choix 1) ou 2) de l'interface (B), le terminal mobile revient à l'état antérieur, c'est à dire avant la réception du message initial.

Si un autre message arrive, le précédent est archivé, et c'est le nouveau, qui, si le terminal affiche instantanément les messages, est présenté sur l'interface (A).

Dans le cas où un message est archivé puis est appelé à nouveau à l'écran du terminal mobile, les choix cumulés des interfaces (A) et (B) sont proposés à l'utilisateur, sauf le choix 1) de l'interface (A) si le message a déjà fait l'objet d'un acquittement correctement effectué.

II est à noter que les choix des interfaces peuvent être effectués par pression sur un bouton ou par reconnaissance d'ordres vocaux par exemple.

La réception des acquittements se fait par des méthodes classiques comme la consultation de courriers ou de messages électroniques, les communications téléphoniques, la consultation de messages sur un répondeur sur réseau (« Top Message » par exempte).

Différentes options sont possibles :
Option 1 : le destinataire du message initial peut appeler depuis son terminal mobile un centre d'appels auquel il dicte les éléments nécessaires à l'acquittement,
Option 2 : l'acquittement peut revenir sous forme d'un message de synthèse vocale laissé sur un répondeur sur réseau (« Top Message ») ou lu au décroché, au numéro laissé à la rubrique(e).
Option 3: un acquittement de réception de message sur le terminal mobile, et non de lecture, peut remonter de façon systématique par la même voie que l'acquittement de lecture.

Le scénario d'utilisation du système d'acquittement selon l'invention qui va être maintenant décrit s'applique au monde de la santé, plus exactement aux soignants itinérants, travaillant dans le cadre d'un service d'hospitalisation à domicile, et se déplaçant par exemple en voiture d'un domicile à l'autre.

Suite à une information concernant un patient, ou à la nécessité d'un changement de planning de dernière minute pouvant être lié à la synchronisation des soins, la surveillante du service décide d'en informer l'infirmière concernée, actuellement en tournée chez les patients dont elle a la charge, et en possession par exemple d'un terminal mobile GSM affichant directement les messages SMS reçus.

La surveillante se connecte au serveur Web offrant le service d'acquittement conforme à l'invention et renseigne les rubriques suivantes :
(a) numéro du terminal GSM de l'infirmière,
(b) texte du message à envoyer,
(c) choix du mode de retour de l'acquittement selon 3 variantes possibles :
variante 1 :
   (d) adresse de courrier électronique de la surveillante (déjà renseignée par l'utilisation précédente),
variante 2 :
   (d) numéro de téléphone du poste de la surveillante qui peut bénéficier d'un service de répondeur sur réseau de type « Top Message » (déjà renseignée par l'utilisation précédente),
variante 3 :
   (d) numéro de téléphone du GSM de la surveillante (déjà renseignée par l'utilisation précédente),
(e) numéro de téléphone du poste de la surveillante (déjà renseignée par l'utilisation précédente), en vue d'un rappel téléphonique direct,
(f) la surveillante décide de ne pas cocher l'option de demande d'acquittement de la simple réception du message.

La surveillante envoie le message qu'elle a composé, lequel est reçu dans un faible délai sur le terminal GSM de l'infirmière.

Si le GSM de l'infirmière est occupé, le réseau tentera à intervalles réguliers d'émettre le message. Si au bout d'un certain temps, ou d'un certain nombre de tentatives, le message n'a pu être acheminé jusqu'au terminal GSM de l'infirmière, le réseau renvoie à la surveillante, par la même voie prévue que l'acquittement de lecture du message, un message lui signifiant la non-remise du message.

L'infirmière aura pris la précaution de positionner le signal de réception de messages SMS sur l'option « vibreur », de façon à rester discret vis à vis du patient si elle est en train d'effectuer un soin à domicile. Depuis son véhicule, ou quand elle le souhaite si elle est chez un patient, elle regarde son GSM qui lui affiche le message envoyé par la surveillante.

Selon le contenu du message, l'infirmière peut soit appeler directement le poste de la surveillante, soit simplement acquitter la lecture du message reçu. Une fois l'une ou l'autre de ces deux actions réalisée, l'infirmière choisit d'effacer ce message.

Si le terminal GSM de l'infirmière est déconnecté du réseau (ce qui est peu probable si elle répond juste après avoir reçu le message), le terminal attend le rétablissement de la liaison pour émettre l'acquittement, l'interface de son GSM l'en informant.

Si le GSM de l'infirmière ne peut communiquer par le réseau pour raison d'encombrement, le GSM tente à intervalles réguliers d'émettre l'acquittement. Si au bout d'un certain temps, ou d'un certain nombre de tentatives, l'acquittement n'a pu être émis, l'interface de son GSM l'informe de cet échec.

Variante 1 : si le serveur de courrier électronique de la surveillante est indisponible (saturation, panne, etc) ou si l'adresse de messagerie est erronée, le réseau retente d'émettre l'acquittement sous forme de courrier électronique. Au bout d'un certain temps, ou d'un certain nombre de tentatives, si le message d'acquittement n'a pu être remis au serveur de la surveillante, un mini-message classique est envoyé à l'infirmière l'informant de cet échec.

La messagerie qui gère le courrier électronique de la surveillante est connectée en permanence. Ainsi, dès la notification de l'arrivée d'un message sur le serveur de courrier électronique, le message d'acquittement est chargé sur son terminal. Dès qu'elle prend connaissance de ce message d'acquittement, la surveillante est certaine que son message initial a été lu.

Variante 2 : le serveur de réception des acquittements de lecture provenant du GSM génère un message vocal puis appelle le numéro précisé par la surveillante. Si la surveillante (ou son répondeur personnel) décroche à cet appel, le message est lu en boucle n fois dès le décroché (si, à la fin des n fois, la surveillante n'a pas raccroché, le serveur raccroche).

Si la surveillante est déjà en communication ou qu'elle ne décroche pas et qu'elle est abonnée à un service de répondeur sur réseau de type « Top Message », le message vocale synthétisé est laissé sur « Top Message ».

Si la surveillante est déjà en communication ou qu'elle ne décroche pas et qu'elle n'est pas abonnée à un service « Top Message », le serveur rappelle un certain nombre de fois.

Au bout d'un certain temps, ou d'un certain nombre de tentatives, si l'acquittement n'a pu être effectué, un mini-message classique est envoyé à l'infirmière l'informant de cet échec.

Dès que la surveillante décroche, ou écoute son répondeur personnel ou interroge « Top Message », elle est certaine que son message initial a été lu.

Variante 3 : le serveur de réception des acquittements de lecture provenant du GSM de l'infirmière génère un nouveau message SMS à destination du GSM de la surveillante. De même que dans les variantes précédentes, au bout d'un certain temps, ou d'un certain nombre de tentatives, si le nouveau message SMS n'a pu être envoyé sur le GSM de la surveillante, un mini-message classique est envoyé à l'infirmière l'informant de cet échec.

Dès que la surveillante prend connaissance du message SMS arrivé sur son GSM, elle est certaine que son message initial a été lu.

La description qui va suivre en regard du dessin annexé, donné à titre d'exemple non limitatif, fera bien comprendre en quoi consiste l'invention et comment elle peut être réalisée.

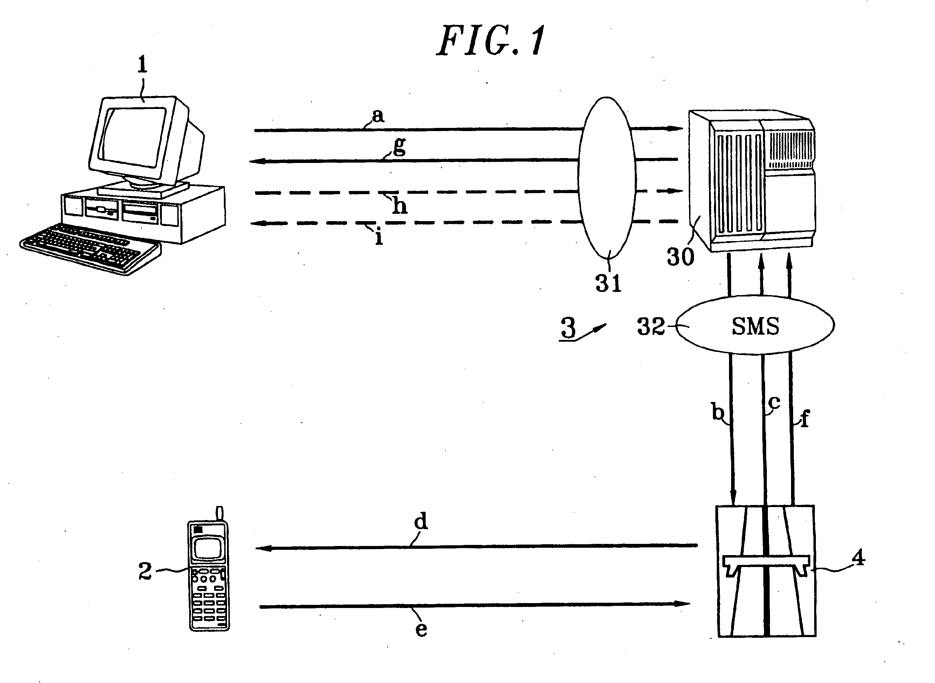

La figure 1 est un schéma d'un système d'acquittement de lecture conforme à l'invention.

Sur la figure 1 est représenté un système d'acquittement de lecture d'un message envoyé par un terminal émetteur 1 et reçu sur un terminal mobile 2 destinataire.

Du côté émetteur, le système comprend, outre l'auteur du message à envoyer, un terminal 1 connecté à l'internet et un navigateur Web, une messagerie électronique et un terminal de téléphonie.

Dans l'exemple de la figure 1, le système comprend du côté récepteur, outre le destinataire du message, un téléphone mobile 2 du type GSM muni d'une carte connue sous l'acronyme SIM (« Subscriber Identification Module ») . La carte SIM est pourvue d'une application apte à mettre en oeuvre le système d'acquittement conforme à l'invention.

La liaison entre le terminal émetteur 1 et le terminal mobile 2 est réalisée à travers un serveur 3 d'intermédiation et d'une passerelle SMS-C 4.

Le serveur 3 d'intermédiation est un serveur applicatif apte à mettre en oeuvre le système d'acquittement conforme à l'invention. Il comprend un automate logiciel à états, un serveur Web 30, une interface 31 de messagerie et de répondeur sur réseau (Top Message), et une interface 32 de communication vers la passerelle SMS-C 4.

Le serveur Web 30 est composé de pages HTML/javascript et d' un script CGI qui permet de recevoir les requêtes d'émission de message. II est capable de générer des pages HTML dynamiques décrivant l'état de chaque message envoyé à la demande de l'émetteur.

L'interface 31 de messagerie et Top Message permet d'envoyer l'état de chaque message respectivement par courrier électronique ou par messagerie Top Message. Les différents états d'un message peuvent être les suivants :
- non reçu par le destinataire, terminal 2 GSM hors couverture,
- non reçu par le destinataire, terminal 2 GSM occupé,
- non reçu par le destinataire, problème de transmission de réseau,
- reçu par le terminal 2 GSM,
- acquitté par le destinataire.

La passerelle SMS-C 4 est une passerelle de télécommunications GSM permettant le routage des messages SMS entre des serveurs applicatifs, comme le serveur 3 d'intermédiation, et des terminaux GSM. II dispose d'un système de notification de réception et permet, de manière générale, aux serveurs applicatifs de savoir :
- si un message SMS a été reçu par un terminal GSM,
- si le terminal destinataire est hors couverture,
- si le terminal destinataire est occupé,
- si une erreur de transmission est survenue.

Le fonctionnement du système d'acquittement de la figure 1 est le suivant.

Sur son terminal 1 connecté à l'Internet et de son navigateur Web, l'émetteur physique se connecte au serveur Web 30 (a). A partir d'un formulaire constitué par une page HTML, il renseigne les champs suivants :
- identifiant du terminal mobile destinataire du message, à savoir ici le numéro du terminal 2 GSM,
- texte du message à envoyer,
- mode de retour de l'acquittement de lecture. Dans un exemple de réalisation, le mode de retour peut être le courrier électronique. L'auteur du message devra donc indiquer dans le formulaire l'identifiant associé qui, dans ce cas, est son adresse de messagerie (si cela n'avait pas déjà été fait lors d'une utilisation précédente).
- éventuellement, l'émetteur physique peut fournir un identifiant d'un moyen de télécommunication où il peut être joint (si cela n'avait pas déjà été fait lors d'une utilisation précédente). Ce sera ici le numéro de son terminal de téléphonie.

L'auteur du message clique ensuite sur un bouton d'envoi du formulaire. Les champs ainsi renseignés sont alors transmis au serveur 3 d'intermédiation par l'intermédiaire du script CGI, lequel renvoie à l'émetteur une page HTML dynamique qui le renseigne sur l'état des messages envoyés, ce qui lui permet de suivre le cheminement du message.

Ensuite, le serveur 3 d'intermédiation formate le message de façon à l'envoyer (b) à la passerelle 4 SMS-C en demandant une notification de réception.

La réception du message SMS par la passerelle 4 est notifiée (c) au serveur 3 d'intermédiation. Cette notification remonte jusqu'à l'émetteur du message par pages HTML dynamiques. En cas d'erreur de transmission, le serveur 3 effectue des tentatives de ré-émission à intervalles réguliers. Si le terminal mobile 2 GSM est hors couverture, le serveur 3 effectue une demande d'alerte à la passerelle SMS-C qui notifiera le serveur de la reconnexion du terminal 2 au réseau.

Le message SMS est alors reçu (d) sur le terminal mobile 2 et déclenche dans la carte SIM une application dédiée qui affiche sur l'écran du terminal un menu comportant les options :
- acquitter le message, et éventuellement répondre par un message sous forme de texte,
- appeler phoniquement l'émetteur du message sur son terminal de téléphonie.

L'acquittement, accompagné éventuellement du message texte, est transmis à la passerelle 4 (e), puis au serveur 3 d'intermédiation (f), et enfin à l'émetteur du message initial (g) selon le mode de retour qu'il aura indiqué au départ, courrier électronique par exemple.

A tout moment, l'auteur du message peut demander (h) au serveur 3 d'intermédiation à travers l'interface 31 l'état d'un message précédemment envoyé. Les différents états ont déjà été décrits plus haut. La réponse est envoyée (i) sous forme de message électronique ou par Top Message

## Revendications

1. Système d'acquittement de lecture d'un message envoyé par un terminal émetteur (1) et reçu sur un terminal mobile (2) destinataire, ledit terminal émetteur (1) comprenant des moyens pour:
- fournir un identifiant du terminal mobile destinataire,
- générer un texte du message à envoyer,
- indiquer au moins un paramètre définissant un mode de retour d'acquittement de lecture dudit message,
ledit terminal mobile destinataire (2) comprenant des moyens pour:
- afficher ledit message envoyé par le terminal émetteur,
- envoyer un acquittement de lecture dudit message selon le mode de retour indiqué,
ledit au moins un paramètre comprenant un identifiant associé à un terminal auquel adresser ledit acquittement de lecture.

2. Système selon la revendication 1, lesdits paramètres comprenant une indication d'une forme de message pour ledit acquittement de lecture.

3. Système selon la revendication 2, la forme de message étant choisie dans le groupe comprenant: un message texte et un message vocal généré par synthèse vocale.

4. Terminal émetteur (1) pour la mise en oeuvre d'un système d'acquittement de lecture de message selon l'une des revendications 1 à 3, le terminal émetteur comprenant des moyens pour:
- fournir un identifiant du terminal mobile destinataire,
- générer un texte d'un message à envoyer au terminal mobile destinataire,
- indiquer au moins un paramètre définissant un mode de retour acquittement de lecture dudit message,
ledit au moins un paramètre comprenant un identifiant associé à un terminal

5. Terminal émetteur (1) selon la revendication 4, comprenant des moyens pour fournir au terminal mobile (2) destinataire un identifiant d'un moyen de télécommunication au moyen duquel un auteur dudit message est joignable par appel phonique.

6. Terminal émetteur (1) selon l'une des revendications 3 ou 4, comprenant des moyens pour demander un envoi d'un acquittement de réception dudit message utilisant ledit mode de retour.

7. Terminal mobile (2) pour la mise en oeuvre d'un système d'acquittement de lecture de message selon l'une des revendications 1 à 3, comprenant des moyens pour:
- afficher un message reçu d'un terminal émetteur (1),
- envoyer un acquittement de lecture dudit message selon un mode de retour indiqué par au moins un paramètre,
ledit au moins un paramètre comprenant un identifiant associé à un terminal auquel adresser ledit acquittement de lecture.

8. Terminal mobile selon la revendication 7, comprenant des moyens d'interface utilisateur pour permettre à un utilisateur du terminal mobile de déclencher un appel phonique avec un auteur dudit message, lesdits moyens d'interface utilisateur étant activés suite à la réception dudit message.

9. Serveur (3) pour la mise en oeuvre d'un système acquittement de lecture de message selon l'une des revendications 1 à 3, comprenant des moyens pour:
- recevoir d'un terminal émetteur (1) un message à transmettre à un terminal mobile destinataire (2),
- recevoir du terminal émetteur au moins un paramètre définissant un mode de retour d'acquittement de lecture dudit message, et
- transmettre, selon ledit mode de retour, un acquittement de lecture reçu du terminal mobile destinataire (2),
ledit au moins un paramètre comprenant un identifiant associé à un terminal auquel adresser ledit acquittement de lecture.

## Claims

1. System for acknowledging reading of a message dispatched by a sender terminal (1) and received on a recipient mobile terminal (2),
said sender terminal (1) comprising means for:
- providing an identifier of the recipient mobile terminal,
- generating a text of the message to be dispatched,
- indicating at least one parameter defining a read acknowledgement return mode for said message,
said recipient mobile terminal (2) comprising means for:
- displaying said message dispatched by the sender terminal,
- dispatching a read acknowledgement for said message according to the return mode indicated,
said at least one parameter comprising an identifier associated with a terminal to which said read acknowledgement is to be addressed.

2. System according to Claim 1, said parameters comprising an indication of a form of message for said read acknowledgement.

3. System according to Claim 2, the form of message being chosen from the group comprising: a text message and a voice message generated by voice synthesis.

4. Sender terminal (1) for implementing a system for acknowledging reading of a message according to one of Claims 1 to 3, the sender terminal comprising means for:
- providing an identifier of the recipient mobile terminal,
- generating a text of a message to be dispatched to the recipient mobile terminal,
- indicating at least one parameter defining a return mode for a read acknowledgement for said message,
said at least one parameter comprising an identifier associated with a terminal to which said read acknowledgement is to be addressed.

5. Sender terminal (1) according to Claim 4, comprising means for providing the recipient mobile terminal (2) with an identifier of a telecommunication means by means of which an author of said message is contactable by phone call.

6. Sender terminal (1) according to one of Claims 3 or 4, comprising means for requesting dispatch of an acknowledgement of receipt of said message using said return mode.

7. Mobile terminal (2) for implementing a system for acknowledging reading of a message according to one of Claims 1 to 3, comprising means for:
- displaying a message received from a sender terminal (1),
- dispatching a read acknowledgement for said message according to a return mode indicated by at least one parameter, said at least one parameter comprising an identifier associated with a terminal to which said read acknowledgement is to be addressed.

8. Mobile terminal according to Claim 7, comprising user interface means for allowing a user of the mobile terminal to trigger a phone call with an author of said message, said user interface means being activated following the receipt of said message.

9. Server (3) for implementing a system for acknowledging reading of a message according to one of Claims 1 to 3, comprising means for:
- receiving from a sender terminal (1) a message to be transmitted to a recipient mobile terminal (2),
- receiving from the sender terminal at least one parameter defining a read acknowledgement return mode for said message,
- transmitting, according to said return mode, a read acknowledgement received from the recipient mobile terminal,
said at least one parameter comprising an identifier associated with a terminal to which said read acknowledgement is to be addressed.

## Patentansprüche

1. System zur Lesebestätigung einer Mitteilung, die von einem sendenden Endgerät (1) gesendet und von einem mobilen Empfangs-Endgerät (2) empfangen wird,
wobei das sendende Endgerät (1) Mittel aufweist, um:
- eine Kennung des mobilen Empfangs-Endgeräts zu liefern,
- einen Text der zu sendenden Mitteilung zu erzeugen,
- mindestens einen Parameter anzugeben, der einen Rücksendemodus der Lesebestätigung der Mitteilung definiert,
wobei das mobile Empfangs-Endgerät (2) Mittel aufweist, um:
- die vom sendenden Endgerät gesendete Mitteilung anzuzeigen,
- eine Lesebestätigung der Mitteilung gemäß dem angezeigten Rücksendemodus zu senden,
wobei der mindestens eine Parameter eine Kennung aufweist, die einem Endgerät zugeordnet ist, an das die Lesebestätigung zu senden ist.

2. System nach Anspruch 1, bei dem die Parameter eine Angabe einer Mitteilungsform für die Lesebestätigung enthalten.

3. System nach Anspruch 2, wobei die Mitteilungsform aus der Gruppe ausgewählt wird, die aufweist: eine Textmitteilung und eine Sprachmitteilung, die durch Sprachsynthese erzeugt wird.

4. Sendendes Endgerät (1) zur Anwendung eines Systems zur Lesebestätigung einer Mitteilung nach einem der Ansprüche 1 bis 3, wobei das sendende Endgerät Mittel aufweist, um:
- eine Kennung des mobilen Empfangs-Endgeräts zu liefern,
- einen Text einer an das mobile Empfangs-Endgerät zu sendenden Mitteilung zu erzeugen,
- mindestens einen Parameter anzugeben, der einen Rücksendemodus für eine Lesebestätigung der Mitteilung definiert,
wobei der mindestens eine Parameter eine Kennung aufweist, die einem Endgerät zugeordnet ist, an das die Lesebestätigung zu senden ist.

5. Sendendes Endgerät (1) nach Anspruch 4, das Mittel aufweist, um an das mobile Empfangs-Endgerät (2) eine Kennung einer Telekommunikationseinrichtung zu liefern, über die ein Verfasser der Mitteilung durch Tonanruf erreicht werden kann.

6. Sendendes Endgerät (1) nach einem der Ansprüche 3 oder 4, das Mittel aufweist, um das Senden einer Empfangsbestätigung der Mitteilung unter Verwendung des Rücksendemodus anzufordern.

7. Mobiles Endgerät (2) zur Anwendung eines Systems zur Lesebestätigung einer Mitteilung nach einem der Ansprüche 1 bis 3, das Mittel aufweist, um:
- eine von einem sendenden Endgerät (1) empfangene Mitteilung anzuzeigen,
- eine Lesebestätigung der Mitteilung gemäß einem mit mindestens einem Parameter angezeigten Rücksendemodus zu senden,
wobei der mindestens eine Parameter eine Kennung aufweist, die einem Endgerät zugeordnet ist, an das die Lesebestätigung zu senden ist.

8. Mobiles Endgerät nach Anspruch 7, das Benutzerschnittstellenmittel aufweist, um es einem Benutzer des mobilen Endgeräts zu ermöglichen, einen Tonanruf mit einem Verfasser der Mitteilung auszulösen, wobei die Benutzerschnittstellenmittel nach dem Empfang der Mitteilung aktiviert werden.

9. Server (3) zur Anwendung eines Systems zur Lesebestätigung einer Mitteilung nach einem der Ansprüche 1 bis 3, das Mittel aufweist, um:
- eine Mitteilung von einem sendenden Endgerät (1) zu empfangen, die zu einem Empfangs-Endgerät (2) zu übertragen ist,
- vom sendenden Endgerät (1) mindestens einen Parameter zu empfangen, der einen Rücksendemodus der Lesebestätigung der Mitteilung definiert,
- eine von dem Empfangs-Endgeräts (2) empfangene Lesebestätigung der Mitteilung gemäß dem Rücksendemodus zu übertragen,
wobei der mindestens eine Parameter eine Kennung aufweist, die einem Endgerät zugeordnet ist, an das die Lesebestätigung zu senden ist.
